# FASCICULE DE BREVET EUROPEEN

(11) **EP 2 297 838 B1**
(45) Date de publication et mention de la délivrance du brevet: **09.11.2016**
(21) Numéro de dépôt: 09761908.4
(22) Date de dépôt: 15.05.2009
(51) Int. Cl.: H02K 1/24, H02K 1/08

(54) **ROTOR D'UNE MACHINE ELECTRIQUE SYNCHRONE MULTIPOLAIRE A POLES SAILLANTS**
LAÜFER EINER SYNCHRONEN ELEKTRISCHEN MEHRPOLARMASCHINE MIT SCHENKELPOLEN
ROTOR FOR A MULTIPOLAR SYNCHRONOUS ELECTRIC MACHINE WITH PROTRUDING POLES

(30) Priorité: 19.05.2008 FR 0853243
(43) Date de publication de la demande: 23.03.2011
(73) Titulaire: Jeumont Electric, 59460 Jeumont (FR)
(72) Inventeur: LALOY, Daniel, F-59460 Jeumont (FR); LEGOIX, Guy, F-59600 Maubeuge (FR); AMMAR, Brahim, F-95380 Louvres (FR)
(74) Mandataire: Lebkiri, Alexandre
(86) Numéro de dépôt international: PCT/FR2009/050917
(87) Numéro de publication internationale: WO 2009/150357

(56) Documents cités:
- GB-A- 204 433
- GB-A- 730 948
- US-A- 3 728 566
- US-A- 3 846 651

## Description

La présente invention concerne le domaine des machines tournantes électriques synchrones comprenant un ensemble statorique et un ensemble rotorique, l'ensemble rotorique pivotant par rapport à l'ensemble statorique autour d'un axe de rotation.

Plus particulièrement, la présente invention concerne un rotor d'une machine électrique synchrone multipolaire, à pôles saillants.

D'une façon générale, les rotors à pôles saillants ont des pôles inducteurs situés à la périphérie d'une couronne du circuit magnétique.

Ces rotors sont généralement utilisés dans les applications à vitesse lente jusque 1000 tr/min en pôles feuilletés et 1500 tr/min en pôles massifs.

De façon connue, le rotor d'une machine électrique synchrone à pôles saillants comporte :
- une partie centrale formée par la couronne du circuit magnétique et par un arbre central ; pour les rotors de faible diamètre l'arbre central et la couronne du circuit magnétique ne forment qu'une seul pièce ;
- des pôles saillants ou pôles formés par une partie centrale appelée corps de pôle ou indifféremment corps polaire et d'une partie périphérique appelée épanouissement polaire ; chaque pôle est parcouru, dans sa partie centrale par une induction constante ; en revanche, à la surface du pôle au niveau d'un épanouissement polaire, l'induction est pulsée par suite de la rotation devant les encoches du stator ;
- des bobines inductrices entourant chaque corps polaire formées par un empilage de spires.

Les machines synchrones sont des machines électriques dont la vitesse de rotation de l'arbre de sortie est égale à la vitesse de rotation du champ magnétique. La magnétisation des machines tournantes à pôles saillants est obtenue par l'inducteur formé par la bobine inductrice entourant le corps polaire.

Les bobines inductrices sont disposées autour des corps polaires selon plusieurs manières.

Selon une première réalisation connue d'un rotor multipolaire à pôles saillants, chaque pôle comprenant un corps polaire et un épanouissement polaire est rapporté sur une jante ou sur un arbre au moyen de clefs, de queues d'aronde, ou de vis. Dans cette réalisation, la bobine est montée sur le corps polaire avant le montage de celui-ci sur la jante ou sur l'arbre. Quel que soit le système d'accrochage utilisé pour le montage du corps polaire sur la jante ou l'arbre, l'accroche est très sollicitée lors de la rotation du rotor.

En effet, les corps polaires, les bobines inductrices et les épanouissements polaires étant éloignés du centre de rotation, ils sont soumis à une force centrifuge lors de la rotation du rotor, la force centrifuge étant d'autant plus importante que le diamètre du rotor et la vitesse de rotation du rotor sont importantes (la force centrifuge subie par les solides en rotation est proportionnelle à leur éloignement et à leur masse). Ainsi, le système d'accrochage doit supporter les efforts engendrés par la rotation du rotor des ensembles rapportés, c'est-à-dire les pièces massives telles que le corps polaire, l'épanouissement polaire et la bobine inductrice enroulée autour du corps polaire. Ainsi, les systèmes d'accrochage des corps polaires du type vis ne conviennent que pour des faibles vitesses de rotation ; les systèmes d'accrochage des corps polaires du type clefs ou queues d'aronde conviennent pour des vitesses de rotation du rotor plus importante mais nécessitent en revanche des usinages très précis et très onéreux des pièces, ainsi qu'une qualité mécanique exigeante des matériaux.

De plus, il est à noter que selon cette première réalisation la mise en place des ensembles corps polaire/bobine/épanouissement polaire sur la jante entraîne une manipulation très délicate et complexe à effectuer due aux masses importantes des pièces à déplacer et à ajuster.

Afin d'éviter une importante sollicitation des accroches reliant.le corps polaire à la jante d'un rotor synchrone, une deuxième réalisation connue de rotor synchrone à pôles saillants consiste à utiliser un corps polaire faisant partie intégrante de la jante ou de l'arbre. Seul l'épanouissement polaire massif est rapporté et fixé sur le corps polaire au moyen de nombreuses vis. La bobine inductrice est mise en place autour du corps polaire avant le montage de l'épanouissement polaire. La mise en position dé l'épanouissement polaire nécessite d'une part une manipulation délicate car c'est une pièce lourde et d'autre part un outillage adapté. De plus, le mode de fixation de l'épanouissement polaire au moyen de vis sur le corps polaire impose nécessairement l'utilisation d'un corps polaire massif plus robuste que l'utilisation d'un corps polaire feuilleté formé d'une succession de tôles magnétiques de quelques millimètres d'épaisseur.

Quelle que soit la réalisation retenue jusqu'ici, la mise en place d'éléments lourds présentant des masses élevées difficilement manipulables, tels que les corps polaires bobinés ou encore les épanouissements polaires rapportés sur les corps polaires, est une opération longue, coûteuse et nécessitant l'utilisation d'outillages spéciaux.

Le document US-A-3.728.566 décrit un tel rotor selon l'état de la technique.

Dans ce contexte, l'invention vise à fournir un rotor de machine électrique synchrone multipolaire, à pôles saillants, dont le montage soit simple, rapide tout en assurant un positionnement précis de chaque bobine autour de chaque corps polaire correspondant.

A cette fin, l'invention propose un rotor d'une machine tournante synchrone multipolaire comportant :
- une pluralité de pôles saillants, chaque pôle saillant étant entouré par une bobine inductrice ;
- une couronne intégrant ladite pluralité de pôles saillants ;
ledit rotor étant **caractérisé en ce que** chaque pôle saillant de ladite pluralité de pôles saillants comporte :
- un corps polaire solidaire de ladite couronne ;
- au moins deux cornes polaires amovibles se faisant face de part et d'autre du corps polaire :
- des pièces frontales, bordant les extrémités dudit corps polaire, pour maintenir radialement ladite bobine inductrice dans sa partie transversale ;
ledit corps polaire comportant deux rainures agencées de part et d'autre dudit corps polaire et dont la forme est adaptée pour recevoir lesdites au moins deux cornes polaires ;
lesdites pièces frontales bloquant les déplacements desdites au moins deux cornes polaires dans lesdites rainures.

Grâce à l'invention, il est possible d'effectuer facilement un montage des cornes polaires sur des corps polaires faisant partie intégrante du rotor, sans l'utilisation d'outillage particulier. Ce dispositif permet de s'affranchir de la manipulation de pièces lourdes telles que les épanouissements ou encore les corps polaires. En effet, les corps polaires font partie intégrante de la couronne du rotor, et seules les cornes polaires correspondant aux extrémités de l'épanouissement polaire, sont rapportées sur le corps polaire. Cela évite donc de disposer d'une pluralité de systèmes d'accroche de pièces lourdes qui sont très sollicités lors de la rotation du rotor par la force centrifuge.

Le rotor de machine électrique synchrone multipolaire à pôles saillants selon l'invention peut également présenter une ou plusieurs des caractéristiques ci-dessous, considérées individuellement ou selon toutes les combinaisons techniquement possibles :
- chaque pôle saillant de ladite pluralité de pôles saillants comporte une première série et une deuxième série comportant chacune une pluralité de cornes polaires agencées le long dudit corps polaire, chaque corne polaire de ladite première série faisant face à une corne polaire de ladite deuxième série ;
- lesdites rainures sont réalisées en continu le long dudit corps polaire ;
- chaque corne polaire comporte une patte d'accroche s'emboitant dans ladite rainure, la forme de ladite patte d'accroche étant adaptée au maintien radial de ladite bobine inductrice ;
- lesdites cornes polaires maintiennent radialement ladite bobine inductrice dans sa partie longitudinale ;
- chacune desdites cornes polaires comporte au moins un conduit d'évacuation apte au refroidissement de ladite bobine inductrice ;
- ledit corps polaire est une pièce feuilletée formée par une succession de tôles magnétiques.

D'autres caractéristiques et avantages de l'invention ressortiront plus clairement de la description qui en est donnée ci-dessous, à titre indicatif et nullement limitatif, en référence aux figures annexées, parmi lesquelles :
- la figure 1 est une vue en coupe par un plan perpendiculaire à l'axe de rotation du rotor, d'un rotor à pôles saillants d'une machine électrique synchrone ;
- la figure 2 est une vue de dessus d'un corps polaire d'un rotor à pôles saillants tel que représenté à la figure 1.

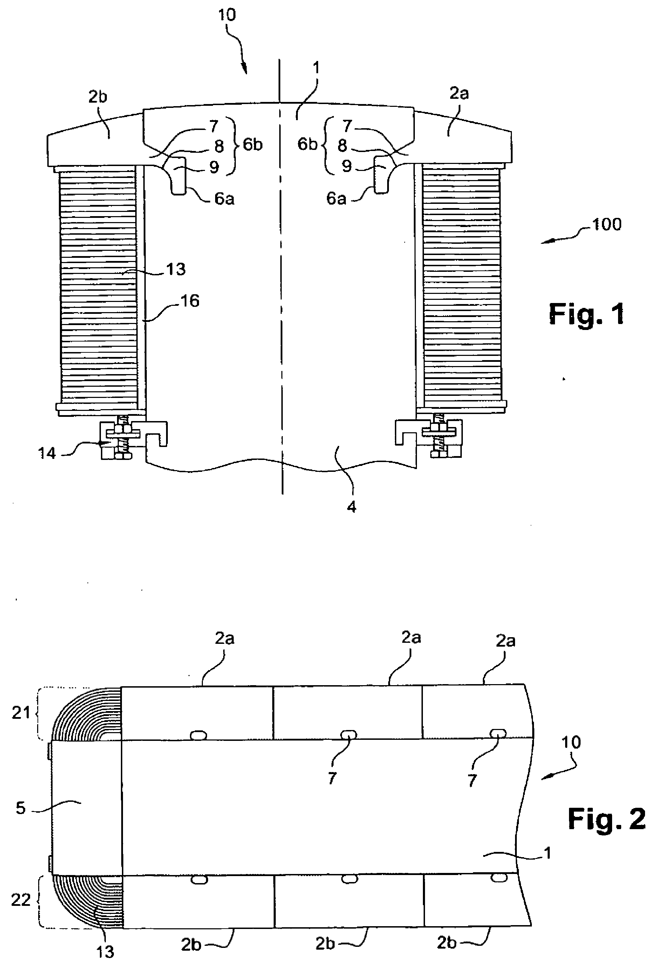

La figure 1 représente une vue en coupe par un plan perpendiculaire à l'axe de rotation du rotor, d'un rotor 100 à pôles saillants d'une machine électrique synchrone.

La figure 1 représente plus particulièrement un pôle saillant 10 parmi une pluralité de pôles saillant du rotor 100.

Chaque pôle saillant 10 comporte un corps de pôle ou corps polaire 1 entouré d'une bobine inductrice 13. Le corps polaire 1 est préférentiellement un corps polaire feuilleté formé par un empilement de tôles d'acier magnétique. Le corps polaire 1 fait partie intégrante d'une jante 4 constituant la roue polaire du circuit magnétique de la machine électrique synchrone. Préférentiellement, la jante 4 est une pièce feuilletée constituée d'un empilement de tôles magnétiques monté à chaud sur un arbre ou un moyeu (non représenté).

La bobine inductrice 13 est réalisée avec un conducteur en cuivre de section circulaire ou rectangulaire entourant le corps polaire avec un certain nombre de spires. La bobine inductrice 13 est bobinée sur mandrins et agglomérées séparément avant d'être montée sur le corps polaire. La bobine inductrice 13 peut comporter un décalage de spires avec une alternance d'une spire sur trois ou quatre spires de façon à former des ailettes de ventilation qui permettent d'augmenter l'efficacité du refroidissement.

La bobine inductrice 13 peut également être bobinée de façon à avoir une périmètre intérieur de la bobine inductrice 13 supérieur au périmètre extérieur du corps polaire 1 de façon créer un passage 16 pour la circulation d'un fluide de refroidissement et ainsi faciliter le refroidissement de la surface interne de la bobine inductrice 13.

L'isolation des spires de la bobine inductrice 13 est réalisée par des bandes isolantes pré-imprégnées d'une résine thermodurcissable. La bobine est ensuite mise sous presse et subit un traitement thermique ce qui permet d'obtenir un ensemble compact avec une excellente conductivité thermique.

Selon un autre mode de l'invention, la bobine inductrice 13 est réalisée avec des fils guipés en fibre de verre. Le fil isolé est ensuite enroulé sur plusieurs couches. Entre chaque couche de fils, on interpose un vernis ou une résine qui a pour rôle de donner la rigidité finale de la bobine inductrice 3 après polymérisation.

Il est également possible, selon une autre mode de réalisation de l'invention, de réaliser la bobine inductrice 13 avec des fils de cuivre émaillés thermo-adhérants. Les fils thermo-adhérants sont des fils de cuivre émaillés recouverts d'une couche externe thermocollante permettant d'obtenir un collage des spires assemblées par polymérisation de cette couche externe sous l'effet de la température et de s'affranchir d'une phase d'application d'un vernis ou d'une résine lors de la réalisation de la bobine inductrice 13.

Le maintien tangentiel de la bobine inductrice 13 lors de la rotation du rotor est réalisé en grande partie par la résistance propre de la bobine inductrice 13, ladite résistance étant obtenue essentiellement en fonction de la qualité mécanique du vernis ou de la résine servant à agglomérer les spires entre elles par polymérisation. Si la contrainte tangentielle de la force centrifuge est telle que la contrainte de cisaillement entre les spires dépasse la contrainte maximale que peut supporter le vernis ou la résine, la bobine inductrice 13 tend à se déformer par gonflement en son centre. Il convient alors de disposer d'un ou de plusieurs coins de calage (non représenté), également appelés coins interpolaires, qui permettent de ramener la contrainte de cisaillement à une valeur acceptable pour les parties de la bobines comprises entre les coins de calage. Généralement, les coins de calage sont vissés sur la jante 4 entre chaque corps polaire 1 de façon à maintenir les bobines inductrices 13 plaquées contre les corps polaires 1.

Le maintien radial de la bobine inductrice 13 est réalisé dans sa partie supérieure par les cornes polaires 2a et 2b, et dans sa partie inférieure par un jeu de ressorts comprimés 14. Le maintien radial de la bobine inductrice 13 dans sa partie inférieure peut également être réalisé par tout autre moyen équivalent permettant un maintenir la bobine inductrice 13 plaquée contre les cornes polaires 2a et 2b.

Par exemple, le maintien radial de la bobine inductrice dans sa partie inférieure peut s'effectuer au moyen d'une tôle support pliée en forme de V disposée au niveau d'un espace inter-pôle, c'est-à-dire entre deux pôles saillants. La tôle support est maintenu bloquée au moyen de blocs de fixation qui sont montés en force, de façon à maintenir plaqué la bobine inductrice 13 contre les cornes polaires 2a et 2b avec une certaine pression.

Des cornes polaires 2a et 2b sont situées, par paire, de part et d'autre du corps polaire 1 sur toute sa longueur, une seule paire corne polaire 2a et 2b étant représentée sur chaque corps polaire 1 de la figure 1. Les paires de cornes polaires 2a et 2b maintiennent en position la bobine inductrice 3 de part et d'autre du corps polaire 1. A cet effet, le corps polaire 1 comporte des encoches 6a correspondant à la forme des accroches 6b des cornes polaire 2a et 2b ; les encoches 6a étant usinées sur toute la longueur du corps polaire 1 formant ainsi un conduit. Les accroches 6b permettent la mise en place par emboîtage puis par glissement dans les encoches 6a des cornes polaires 2a et 2b sans autre moyen de fixation. L'emboitage s'effectue à partir de chaque extrémité du corps polaire 1 et le glissement suivant le sens longitudinal dudit corps polaire 1. Les accroches 6b ont la forme par exemple d'un crochet orienté sensiblement vers le centre du rotor, composé d'une première partie 7 de section sensiblement triangulaire rejoignant une deuxième partie 9 de section sensiblement rectangulaire, les deux parties 7 et 9 étant raccordées par un élément coudé 8.

La forme particulière des accroches 6b permet un maintien radial des cornes polaires 2a et 2b, et permet d'encaisser les sollicitations occasionnées par la force centrifuge de la bobine inductrice 3 lors de la rotation du rotor, et notamment de la composante radiale.

La figure 2 est une vue de dessus d'un corps polaire 1 d'un rotor 100 à pôles saillants 10 d'une machine électrique synchrone selon l'invention représenté en référence à la figure 1.

La figure 2 illustre particulièrement une série de cornes polaires 2a et 2b mises en position sur le corps polaire 1 et bloquant radialement la bobine inductrice 3 du pôle.

Des joues 5, situées aux extrémités du corps polaire 1 (seule une joue 5 est représentée), sont maintenues solidaires de la jante 4 au moyen d'un système de fixation du type vis. Les joues 5 sont des pièces massives en acier usinées, forgées ou moulées qui permettent de maintenir en position les cornes polaires 2a et 2b après leur mise en place sur le corps polaire 1. Elles évitent ainsi tout déplacement longitudinal des cornes polaires 2a et 2b. En effet aux extrémités du corps polaire 1, les joues 5 obstruent les encoches 6a du corps polaire 1 correspondant aux accroches 6b de sorte que les cornes polaires 2a et 2b ne puissent plus être démontées, ni déplacées dans le sens longitudinal du corps polaire 1. Les joues 5 permettent également de maintenir radialement la partie frontale de la bobine inductrice 13 et positionne axialement l'ensemble de la bobine inductrice 13.

L'utilisation combinée des cornes polaires 2a et 2b, et des joues 5 en remplacement d'un épanouissement polaire selon l'art antérieur permet de disposer de deux zones 21 et 22 de non recouvrement, à chaque extrémité de la bobine inductrice 3. Ces zones 21 et 22 améliorent le refroidissement de la bobine inductrice 3 en augmentant sa surface de contact avec l'air ambiant ou tout autre fluide de refroidissement.

Les cornes polaires 2a et 2b peuvent comporter des conduits d'évacuation 7 favorisant également le refroidissement de la bobine inductrice 13, et du rotor, par la circulation du fluide de refroidissement. Les conduits d'évacuation 7 traversent les cornes polaires 2a et 2b au niveau de la face de contact entre celles-ci et le corps polaire 1. Ainsi, les conduits d'évacuation 7 permettent au fluide de refroidissement de s'échapper et de se renouveler après avoir effectué des échanges thermiques avec la surface interne de la bobine inductrice 13.

Le montage du rotor à pôles saillants d'une machine synchrone illustré se réalise facilement et rapidement avec un nombre restreint d'outillage.

La bobine inductrice 13, réalisée séparément, est introduite autour du corps polaire 1 préalablement isolé du rotor et est calée tangentiellement sur le corps polaire 1.

Les cornes polaires 2a et 2b sont enfilées par glissement sur le corps polaire 1 au moyen des encoches 6a.

Les joues 5 sont ensuite enfilées et fixées sur la jante 4 ou sur le corps polaire 1 au moyen de vis. Les cornes polaires sont ainsi bloquées longitudinalement.

La bobine inductrice 13 est maintenue radialement dans sa partie extérieure par les cornes polaires 2a et 2b, et dans sa partie intérieure par un jeu de ressorts comprimés ou tout autre moyen équivalent.

Le jeu de ressorts exerce une certaine pression de contact sur la bobine inductrice 13 de façon à la maintenir radialement lors de l'arrêt et de la rotation du rotor 100.

Toutes les opérations décrites pour le montage des cornes polaires 2a et 2b, et des joues 5 sur le corps polaire 1 sont effectuées facilement sans outillage particulier.

Enfin, le jeu de montage, de l'ordre de quelques millimètres, nécessaire à la descente de la bobine inductrice 13 autour du corps polaire 1 est ensuite comblé par des feuilles isolantes, généralement des feuilles de stratifié, d'épaisseur adéquate pour limiter le jeu tangentiel.

Ainsi, l'invention a pour objet la réalisation d'un rotor multipolaire, à pôles saillants, d'une machine électrique synchrone permettant le montage simple et rapide sans outillages spéciaux.

La forme astucieuse des cornes polaires permet à la fois un montage rapide et facile et à la fois un maintien de la bobine inductrice lors de l'arrêt et lors de la rotation du rotor. Lorsqu'il est nécessaire de nettoyer, de réparer ou de remplacer une bobine inductrice, l'opération de démontage est à la fois largement facilitée, sans le recours à des outillages spéciaux, et rapide.

Il a été essentiellement décrit un rotor multipolaire à pôles saillants d'une machine électrique synchrone comportant un corps polaire feuilleté ; toutefois, l'invention est également applicable à un rotor multipolaire à pôles saillants d'une machine électrique synchrone comportant un corps polaire monobloc massif intégré à une jante massive constituant la roue polaire du circuit magnétique.

## Revendications

1. Rotor d'une machine tournante synchrone multipolaire comportant :
- une pluralité de pôles saillants (10), chaque pôle saillant (10) étant entouré par une bobine inductrice (13) ;
- une couronne (4) intégrant ladite pluralité de pôles saillants (10) ; ledit rotor étant **caractérisé en ce que** chaque pôle saillant (10) de ladite pluralité de pôles saillants (10) comporte :
- un corps polaire (1) solidaire de ladite couronne (4) ;
- au moins deux de cornes polaires (2a, 2b) amovibles se faisant face de part et d'autre dudit corps polaire (1) ;
- des pièces frontales (5), bordant les extrémités dudit corps polaire (1), pour maintenir radialement ladite bobine inductrice (13) dans sa partie transversale ;
ledit corps polaire (1) comportant deux rainures (6a) agencées de part et d'autre dudit corps polaire (1) et dont la forme est adaptée pour recevoir lesdites au moins deux cornes polaires (2a, 2b) ;
lesdites pièces frontales (5) bloquant les déplacements desdites au moins deux cornes polaires (2a, 2b) dans lesdites rainures (6a).

2. Rotor d'une machine tournante synchrone multipolaire selon la revendication 1 **caractérisé en ce que** chaque pôle saillant (10) de ladite pluralité de pôles saillants (10) comporte une première série et une deuxième série comportant chacune une pluralité de cornes polaires (2a, 2b) agencées le long dudit corps polaire (1), chaque corne polaire (2a) de ladite première série faisant face à une corne polaire (2b) de ladite deuxième série.

3. Rotor d'une machine tournante synchrone multipolaire selon l'une des revendications 1 à 2 **caractérisé en ce que** lesdites rainures (6a) sont réalisées en continu le long dudit corps polaire (1).

4. Rotor d'une machine tournante synchrone multipolaire selon l'une des revendications 1 à 3 **caractérisé en ce que** chaque corne polaire (2a, 2b) comporte une patte d'accroche (6b) s'emboitant dans ladite rainure (6a), la forme de ladite patte d'accroche (6b) étant adaptée au maintien radial de ladite bobine inductrice (13).

5. Rotor d'une machine tournante synchrone multipolaire selon l'une des revendications 1 à 4 **caractérisé en ce que** lesdites cornes polaires (2a, 2b) maintiennent radialement ladite bobine inductrice (13) dans sa partie longitudinale.

6. Rotor d'une machine tournante synchrone multipolaire selon l'une des revendications 1 à 5 **caractérisé en ce que** chacune desdites cornes polaires (2a, 2b) comporte au moins un conduit d'évacuation (7) apte au refroidissement de ladite bobine inductrice (13).

7. Rotor d'une machine tournante synchrone multipolaire selon l'une des revendications 1 à 6 **caractérisé en ce que** ledit corps polaire (1) est une pièce feuilletée formée par une succession de tôles magnétiques.

## Patentansprüche

1. Rotor einer sich drehenden, synchronen, multipolaren Maschine, umfassend:
- eine Vielzahl von hervorstehenden Polen (10), wobei jeder hervorstehende Pol (10) von einer Induktionsspule (13) umgeben ist;
- eine Krone (4), die die genannte Vielzahl von hervorstehenden Polen (10) integriert;
wobei der genannte Rotor **dadurch gekennzeichnet ist, dass** jeder hervorstehende Pol (10) der genannten Vielzahl von hervorstehenden Polen (10) umfasst:
- einen polaren Körper (1), der fest mit der genannten Krone (4) verbunden ist;
- wenigstens zwei abnehmbare Polhörner (2a, 2b), die auf jeder Seite des genannten polaren Körpers (1) gegenüberliegen;
- frontale Stücke (5), die die Enden des genannten polaren Körpers (1) säumen, um die genannte Induktionsspule (13) in ihrem transversalen Teil zu halten;
wobei der genannte polare Körper (1) zwei Rillen (6a) umfasst, die auf jeder Seite des genannten polaren Körpers (1) angeordnet sind und deren Form geeignet ist, um die genannten wenigstens zwei Polhörner (2a, 2b) aufzunehmen;
wobei die genannten frontalen Teile (5) die Verschiebungen der genannten wenigstens zwei Polhörner (2a, 2b) in den genannten Rillen (6a) blockieren.

2. Rotor einer sich drehenden, synchronen, multipolaren Maschine gemäß Anspruch 1, **dadurch gekennzeichnet, dass** jeder hervorstehende Pol (10) der genannten Vielzahl von hervorstehenden Polen (10) eine erste Serie und eine zweite Serie umfasst, die jeweils eine Vielzahl von Polhörnern (2a, 2b) umfassen, die entlang dem genannten polaren Körper (1) angeordnet sind, wobei jedes Polhorn (2a) der genannten ersten Serie einem Polhorn (2b) der genannten zweiten Serie gegenüberliegt.

3. Rotor einer sich drehenden, synchronen, multipolaren Maschine gemäß einem der Ansprüche 1 bis 2, **dadurch gekennzeichnet, dass** die genannten Rillen (6a) kontinuierlich entlang dem genannten Polkörper (1) realisiert sind.

4. Rotor einer sich drehenden, synchronen, multipolaren Maschine gemäß einem der Ansprüche 1 bis 3, **dadurch gekennzeichnet, dass** jedes Polhorn (2a, 2b) eine Befestigungsklause (6b) umfasst, die in die genannte Rille (6a) einrastet, wobei die Form der genannten Befestigungsklaue (6b) für das radiale Festhalten der genannten Induktionsspule (13) geeignet ist.

5. Rotor einer sich drehenden, synchronen, multipolaren Maschine gemäß einem der Ansprüche 1 bis 4, **dadurch gekennzeichnet, dass** die genannten Polhörner (2a, 2b) die genannte Induktionsspule (13) in ihrem länglichen Teil radial halten.

6. Rotor einer sich drehenden, synchronen, multipolaren Maschine gemäß einem der Ansprüche 1 bis 5, **dadurch gekennzeichnet, dass** jedes der genannten Polhörner (2a, 2b) wenigstens eine Auslaufleitung (7) umfasst, die zum Abkühlen der genannten Induktionsspule (13) geeignet ist.

7. Rotor einer sich drehenden, synchronen, multipolaren Maschine gemäß einem der Ansprüche 1 bis 6, **dadurch gekennzeichnet, dass** der genannte Polkörper (1) ein geschichtetes Stück ist, das durch eine Folge von magnetischen Blechen gebildet ist.

## Claims

1. Rotor for a multipolar synchronous rotating machine comprising:
- a plurality de salient poles (10), with each salient pole (10) being surrounded by an induction coil (13);
- a ring (4) integrating said plurality of salient poles (10); said rotor being **characterised in that** each salient pole (10) of said plurality of salient poles (10) comprises:
- a pole body (1) integral with said ring (4);
- at least two removable pole tips (2a, 2b) facing each other on either side of said pole body (1);
- front parts (5), bordering the ends of said pole body (1), for radially maintaining said induction coil (13) in the transverse portion thereof;
said pole body (1) comprising two slots (6a) formed on either side of said pole body (1) and of which the shape is adapted to receive said at least two pole tips (2a, 2b);
said front parts (5) blocking the movements of said at least two pole tips (2a, 2b) in said slots (6a).

2. Rotor for a multipolar synchronous rotating machine according to claim 1 **characterised in that** each salient pole (10) of said plurality of salient poles (10) comprises a first series and a second series each comprising a plurality de pole tips (2a, 2b) arranged along said pole body (1), with each pole tip (2a) of said first series facing a pole tip (2b) of said second series.

3. Rotor for a multipolar synchronous rotating machine according to one of claims 1 to 2 **characterised in that** said slots (6a) are made continuously along said pole body (1).

4. Rotor for a multipolar synchronous rotating machine according to one of claims 1 to 3 **characterised in that** each pole tips (2a, 2b) comprises a fastening tab (6b) nesting into said slot (6a), with the shape of said fastening tab (6b) being able to radially maintain said induction coil (13).

5. Rotor for a multipolar synchronous rotating machine according to one of claims 1 to 4 **characterised in that** said pole tips (2a, 2b) radially maintain said induction coil (13) in the longitudinal portion thereof.

6. Rotor for a multipolar synchronous rotating machine according to one of claims 1 to 5 **characterised in that** each one of said pole tips (2a, 2b) comprises at least one removal duct (7) able to cool said induction coil (13).

7. Rotor for a multipolar synchronous rotating machine according to one of claims 1 to 6 **characterised in that** said pole body (1) is a multi-layered part formed by a succession of magnetic sheets.
